Europäisches Patentamt

European Patent Office

Office européen des brevets

(11) Numéro de publication: **0 261 018 B1**

(12) **FASCICULE DE BREVET EUROPEEN**

(45) Date de publication de fascicule du brevet:
**02.01.92**

(21) Numéro de dépôt: **87401991.2**

(22) Date de dépôt: **04.09.87**

(51) Int. Cl.⁵: **H02M 7/5387**

(54) **Onduleur de tension autopiloté en fréquence.**

(30) Priorité: **09.09.86 FR 8612617**

(43) Date de publication de la demande:
**23.03.88 Bulletin 88/12**

(45) Mention de la délivrance du brevet:
**02.01.92 Bulletin 92/01**

(84) Etats contractants désignés:
**AT BE CH DE ES GB IT LI LU NL SE**

(56) Documents cités:
**DE-A- 3 237 716**
**FR-A- 2 325 238**
**US-A- 3 852 656**
**US-A- 3 953 779**
**US-A- 4 308 577**

(73) Titulaire: **COMPAGNIE FRANCAISE D'ELEC-
TROTHERMIE INDUSTRIELLE C.F.E.I.
131, avenue Aristide Brian
F-68200 Mulhouse(FR)**

(72) Inventeur: **Lafore, Dominique
CD 43 St. Jean de Garguier
F-13420 Gemenos(FR)**

(74) Mandataire: **de Beaumont, Michel et al
1bis, rue Champollion
F-38000 Grenoble(FR)**

## Description

La présente invention se rapporte à un onduleur de tension autopiloté en fréquence.

Les onduleurs de tension sont des convertisseurs de puissance alimentés par une source de tension continue et alimentant à leur tour une charge résonante série. Ils comportent essentiellement des interrupteurs semiconducteurs commandés disposés, dans la structure la plus simple, an "demi-pont", c'est-à-dire en série aux bornes de la source de tension, la charge étant reliée à leur point commun, ou plus classiquement, montés en pont. Pour éviter le court-circuit de la source de tension, ces interrupteurs devraient être commandés de façon que lorsque l'un d'eux (ou l'une diagonales du pont) est fermé, l'autre soit ouvert et inversement. Toutefois, une telle condition n'est pas suffisante pour éviter le court-circuit, car il faut prendre en compte divers retards se produisant dans les circuits de commande de ces interrupteurs et dans leur processus d'ouverture. Pour compenser ces retards, les onduleurs connus comportent des circuits spécifiques dits de "temps mort" lorsque les interrupteurs untilsés, en particulier aux fréquences élevées, sont des transistors bipolaires ou des transistors MOS avec diode en anti-paralléle. On connait également des onduleurs comportant en tant qu'interrupteurs des "thyristors duaux" qui évitent de générer ces temps morts à condition que les ordres de commande soient en avance vis-à-vis du courant dans la charge, mais une telle solution présente des difficultés au moment du démarrage, ce qui nécessite des circuits annexes d'aide au démarrage. En outre, pour les applications dans lesquelles la fréquence de résonance varie ou n'est pas connue, il faut essentielement tenir compte des critères suivants : gamme d'accrochage au démarrage, vitesse de suivi en fréquence et dynamique de fréquence. Les onduleurs connus, en particulier ceux délivrant de fortes puissances (au moins plusieurs kilowatts), pour satisfaire auxdits critères, comportent des circuits de commande assurant un fonctionnement en avance de phase. Ces circuits de commande réalisent un contrôle de phase à l'aide d'une boucle à verrouillage de fréquence et de phase, ce qui nécessite des conditions de démarrage spécifiques mises en oeuvre par des circuits relativement complexes. En outre, la boucle de verrouillage de fréquence et de phase présente des constantes de temps de réaction relativement lentes par rapport à la fréquence d'oscillation du circuit oscillant, ce qui limite la dynamique de fréquence et la vitesse de réaction aux changements de fréquence. Les documents DE-A-3 237 716 et US-A-3 852 656 divulguent des onduleurs dans lesquels la commande des interrupteurs est effectuée à partir de la détection du passage à zéro du courant dans la charge.

La présente invention a pour objet un onduleur de tension ne nécessitant pas de circuits de démarrage, ni de circuits de "temps mort", offrant une large dynamique de fréquence et une réaction rapide aux variations de fréquence, et ce, à l'aide de moyens simples et peu onéreux.

L'onduleur de tension conforme à la présente invention comporte au moins un demi-pont d'interrupteurs commandés, un capteur de courant, captant le courant passant dans la charge, relié à un détecteur de zéro suivi d'un circuit d'inversion de phase dont la sortie non inversée est reliée à un interrupteur dans le cas d'un demi-pont ou à une diagonale de pont d'imterrupteurs, et dont la sortie inversée est reliée à l'autre interrupteur ou à l'autre diagonale, respectivement, chaque interrupteur commandé étant en montage cascode et comprend un interrupteur principal en série avec un interrupteur auxiliaire, la commande se faisant par ouverture et fermeture de l'interrupteur auxiliaire; et un circuit, disposé entre les bornes de l'interrupteur commandé, constitué d'un montage parallèle d'une capacité et d'une diode zener en série avec une diode.

Selon encore une autre caractéristique de l'invention, l'onduleur comporte en aval du détecteur de zéro un circuit d'inhibition relié à une borne recevant au moins signal extérieur inhibant le signal de commande des interrupteurs.

Selon encore une autre caractéristique de l'invention, lorsque l'onduleur comporte un transformateur d'isolation galvanique dans le circuit de commande des interrupteurs, ledit transformateur d'isolation comporte un enroulement auxiliaire relié via un dispositif redresseur à un interrupteur normalement ouvert, et court-circuitant la sortie du pont sous la commande dudit signal extérieur.

Lorsque le capteur de courant de charge comporte un transformateur de courant, l'onduleur comporte un comparateur produisant un desdits signaux extérieurs tant que la tension alimentant l'onduleur n'atteint pas un seuil déterminé correspondant sensiblement au niveau maximal du bruit pouvant être produit par ce transformateur de courant.

La présente invention sera mieux comprise à la lecture de la description détaillée de plusieurs modes de réalisation, pris comme exemples non limitatifs et illustrés par le dessin annexé, sur lequel :

- la figure 1 est un schéma de principe d'un montage cascode utilisé dans l'onduleur conforme à l'invention ;
- la figure 2 est un diagramme de formes d'ondes dans le circuit de la figure 1 montrant son comportement auto-limiteur en cas de court-circuit momentané de la source par des interrupteurs;

- la figure 3 est un schéma de principe très simplifié d'un onduleur conforme à l'invention ;
- la figure 4 est un bloc-diagramme partiel d'un onduleur conforme à l'invention, montrant en particulier ses circuits de sécurité, d'autorisation de démarrage, et de commande par trains d'ondes ;
- la figure 5 est un diagramme de formes c'ondes relevées dans l'onduleur de la figure 3 ou 4, et
- les figures 6 et 7 sont des schémas de deux modes de réalisation du circuit cascode de l'onduleur conforme à l'invention.

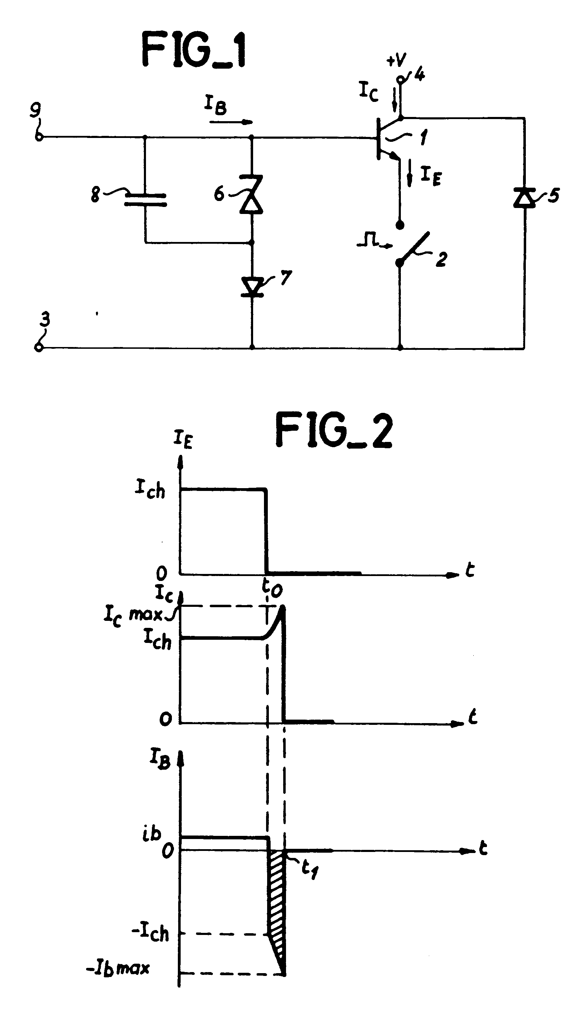

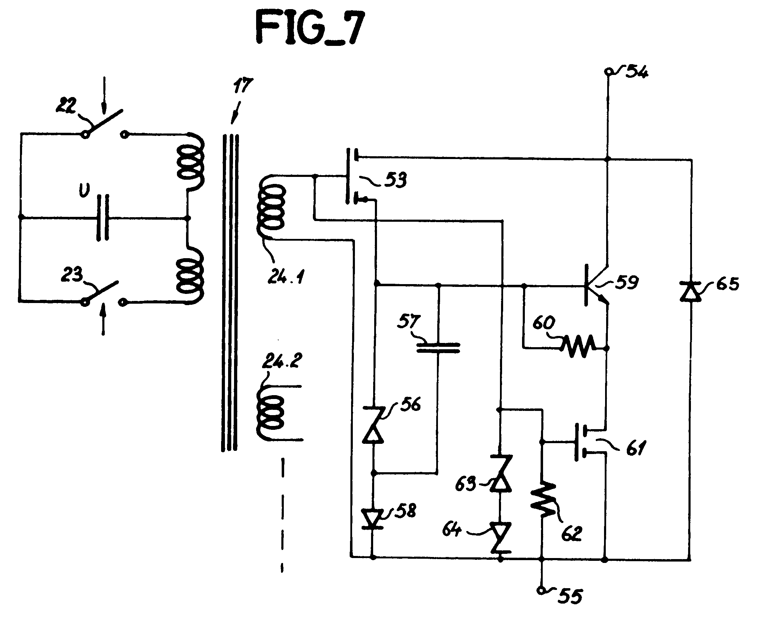

L'onduleur conforme à l'invention comporte, de façon connue en soi, un demi-pont ou un pont complet d'interrupteurs commandés. Ces interrupteurs commandés sont, selon une des caractéristiques essentielles de l'invention, de type "cascode". Un tel montage cascode est représenté de façon simplifiée en figure 1. Il comporte un semiconducteur principal 1, qui est généralement un transistor bipolaire ou bien un Darlington bipolaire ou un bipolaire MOS, dont l'émetteur est relié par un interrupteur auxiliaire 2 à une borne 3. L'interrupteur 2 est, de préférence, un transistor MOS ou un bipolaire basse tension. Le collecteur du transistor 1 est relié à une borne 4. La borne 3 est reliée à l'anode d'une diode 5 dont la cathode est reliée à la borne 4. La base du transistor 1 est reliée à la cathode d'une diode Zener 6 dont l'anode est reliée à l'anode d'une diode 7. La cathode de la diode 7 est reliée à la borne 3. Un condensateur 8 est branché en parallèle sur la diode Zener 6. La base du transistor 1 est reliée à une borne 9. On obtient ainsi entre les bornes 4 et 3 un interrupteur commandé dont la commande se fait par commande des ouvertures et fermetures de l'interrupteur auxiliaire 2. La base du transistor 1 reçoit un courant $I_B$, qui peut être fourni par une source auxiliaire à tension constante reliée à la borne 9 (voir ci-dessous explications de la figure 6), ou bien qui peut être commandé par le signal commandant l'interrupteur auxiliaire 2 (voir ci-dessous explications de la figure 7).

La diode 5 assure, de façon classique, la bidirectionnalité en courant de l'interrupteur cascode. La diode Zener 6 permet, lors de l'ouverture de l'interrupteur 2, l'évacuation des charges du transistor 1 par sa jonction collecteur-base, ce qui accélère le temps d'exécution des ordres d'ouverture. Le condensateur 8 améliore la mise en conduction du transistor 1, lors de la fermeture de l'interrupteur 2. La diode 7 évite la réinjection de charges dans la base du transistor 1 lors de l'inversion du courant de l'onduleur, ce courant passant alors exclusivement par la diode 5.

On va maintenant expliquer, en référence au diagramme de la figure 2, le comportement du montage cascode lors de l'amorce d'un court-circuit, c'est-à-dire lorsque les deux interrupteurs d'un demi-pont ou les quatre interrupteurs d'un pont complet sont fermés simultanément (ou plus exactement quand l'un d'eux ou l'une des diagonales n'est encore ouvert-e- alors que l'autre se ferme). A l'instant $t_o$ l'interrupteur auxiliaire 2 d'un premier interrupteur cascode s'ouvre, et on suppose que l'autre interrupteur cascode est fermé. Le courant d'émetteur $I_E$ du transistor 1 de ce premier interrupteur passe donc presque intantanément de la valeur $I_{ch}$ (c'est pratiquement le courant dans la charge) à Zéro à l'instant $t_o$. Par contre le courant collecteur $I_c$ de ce transistor 1 a tendance à augmenter brusquement parce qu'il s'écoule à travers la jonction collecteur-base de ce transistor, et de la base se referme via les diodes 6 et 7 et l'autre interrupteur cascode, pour court-circuiter la source de tension alimentant l'onduleur. Ainsi, à l'instant $t_o$, le courant de base $I_B$ du transistor 1, qui auparavant avait une valeur positive $i_b$ (sens conventionnel du courant base de la base vers l'émetteur), passe presque instantanément à la valeur - $I_{ch}$. Or ce courant inverse est dû uniquement à la présence de charges accumulées dans la base du transistor 1 à l'instant $t_o$, dont la quantité est fonction du courant $I_{ch}$. Le trajet sur lequel se referme ce courant inverse étant pratiquement un court-circuit, il augmente brusquement, mais s'annule d'autant plus rapidement qu'il augmente plus rapidement : ladite quantité de charges accumulées étant fixée, le courant inverse s'annule dès qu'elle est épuisée, et la vitesse d'épuisement est directement fonction de la vitesse d'augmentation du courant. Sur le chronogramme de $I_b$ de la figure 2, la surface hachurée représente ladite quantité de charges, et cette surface est d'autant plus étroite que la valeur maximale - $I_{bmax}$ atteinte par le courant avant son annulation est plus élevée (en valeur absolue), et l'amplitude de - $I_{bmax}$ est fonction de la pente du courant au-delà de - $I_{ch}$. Après - $I_{bmax}$, le courant de base $I_b$, de même que le courant de collecteur $I_c$ s'annulent presque instantanément en $t_1$.

Par conséquent, l'augmentation de la vitesse d'ouverture de l'interrupteur cascode est fonction de l'importance du court-circuit, et bien que le courant inverse puisse atteindre des valeurs élevées, sa durée de passage est fonction inverse de son amplitude maximale, et il ne risque donc pas de détruire le transistor 1. On obtient ainsi une auto-limitation du régime de court-circuit, et il n'y a plus besoin d'utiliser les classiques circuits de "temps mort" quel que soit le déphasage entre l'impulsion de commande d'ouverture de l'interrupteur et le passage par zéro du courant de charge.

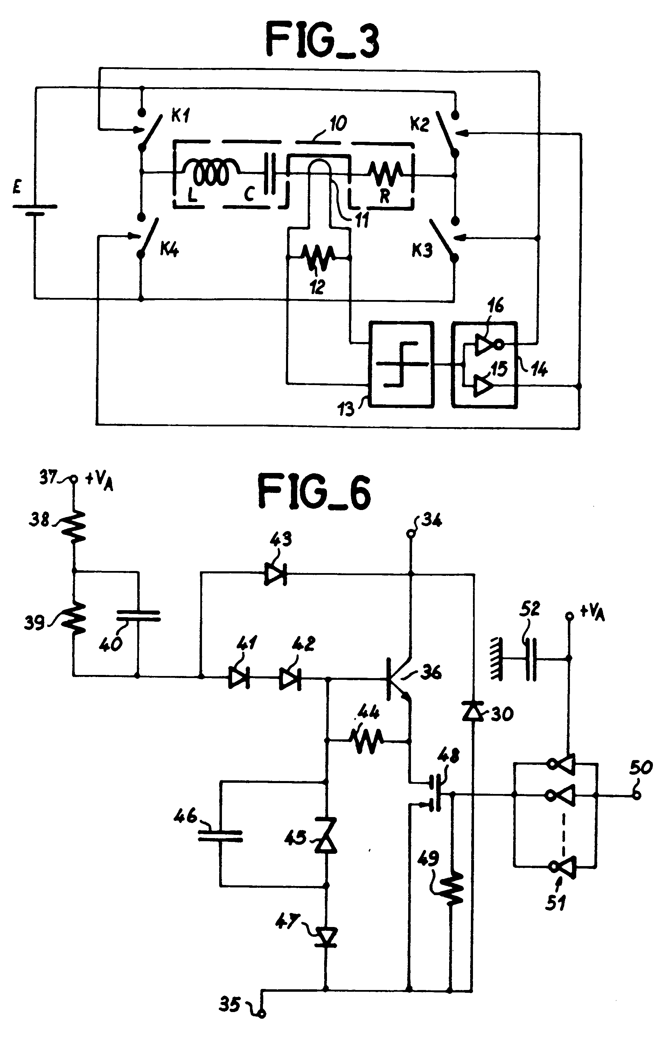

On a représenté sur la figure 3 le schéma simplifié d'un onduleur conforme à l'invention. Cet onduleur est alimenté en tension par une source que l'on a symbolisée par un générateur de tension E. Cette source peut être aussi bien un générateur de tension continue qu'un générateur de tension alternative suivi d'un redresseur et d'un filtre approprié. Le générateur E alimente un pont comportant quatre interrupteurs commandés K1 à K4. Ces interrupteurs sont disposés en deux branches parallèles comportant respectivement, en série, les interrupteurs K1, K4 et K2, K3. La charge 10, par exemple un inducteur de chauffage, est disposée à la sortie du pont, c'est-à-dire entre les points communs de K2, K3 d'une part et K1, K4 d'autre part. Cette charge est à résonance série et peut être représentée schématiquement par ses éléments inductif L, capacitif C et résistif R en série. Le courant passant dans la charge est mesuré à l'aide d'un dispositif, qui est généralement un transformateur de mesure 11 aux bornes duquel est branchée sa résistance de charge 12. La sortie de ce transformateur est reliée à un détecteur de zéro 13 dont la sortie est reliée via un dispositif inverseur 14 aux entrées de commande des interrupteurs K1 à K4. En principe, il suffirait que le détecteur 13 soit directement relié aux entrées de commande des interrupteurs d'une diagonale du pont et via un inverseur à celle des interrupteurs de l'autre diagonale, mais cela produirait une différence sensible de temps de transit entre les voies de commande des interrupteurs des deux diagonales. Pour ramener cette différence à une valeur négligeable, il est préférable d'insérer dans la voie de commande sans inversion un "buffer" 15, un inverseur 16 étant inséré dans l'autre voie. Toutefois, il est bien entendu que le dispositif 14 peut avoir une technologie différente, il peut par exemple comporter un transformateur, assurant en même temps l'isolation galvanique entre la source de tension et les électrodes de commande des interrupteurs, les différents enroulements secondaires de ce transformateur étant branchés en fonction des déphasages à obtenir (0 ou 180$^\circ$).

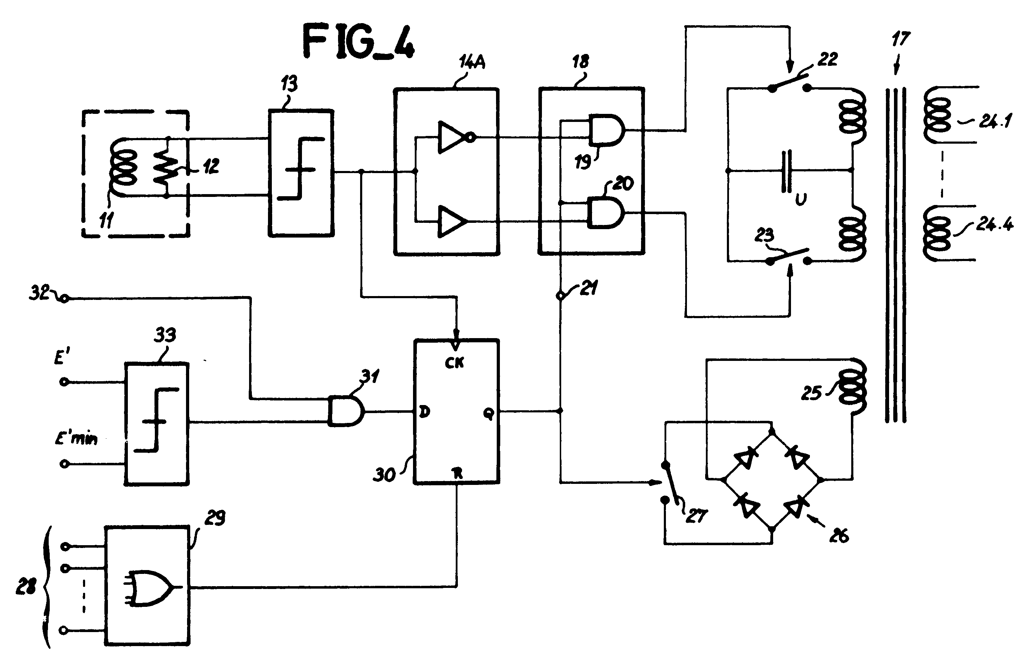

On n'a représenté sur la figure 4 que les circuits de commande des interrupteurs K1 à K4, avec isolation galvanique par un transformateur 17. Dans ce cas, le dispositif inverseur 14A, disposé à la sortie du détecteur 13, sert à inverser le sens du courant primaire du transformateur 17 à chaque passage par zéro du courant de la charge.

A la sortie du dispositif 14A, on relie un circuit de validation 18 comportant simplement deux portes ET à deux entrées 19, 20. Une entrée de la porte 19 et de la porte 20 est reliée respectivement à la sortie inversée et à la sortie non inversée du dispositif 14A. Les autres entrées de ces portes sont reliées ensemble et à une borne 21.

L'enroulement primaire du transformateur 17 comporte un point milieu auquel est reliée une borne d'une source d'alimentation auxiliaire U dont l'autre borne est reliée à chacune des extrémités de cet enroulement primaire via un interrupteur commandé 22, 23 respectivement. Chacune des deux sorties du circuit 18 est reliée à l'électrode de commande d'un interrupteur 22, 23 respectivement. Les quatre enroulements secondaires 24.1 à 24.4 du transformateur 17 sont reliés aux circuits de commande des interrupteurs K1 à K4 de façon à respecter les polarités nécessaires, comme précisé ci-dessus en référence à la figure 3 : les commandes de K1 et K3 doivent être en phase ente elles, de même que les commandes de K2 et K4, un déphasage de pratiquement 180$^\circ$ devant être assuré entre les commandes de K1, K3 d'une part et K2, K4 d'autre part, et ce, par simple inversion des branchements des enroulements secondaires du transformateur 17.

Le transformateur 17 comporte en outre un enroulement auxiliaire 25 relié à l'entrée d'un pont redresseur 26 dont la sortie est branchée sur un interrupteur commandé 27 (qui court-circuite l'enroulement 25 lorsqu'il est fermé). Dans un exemple de réalisation, si on appelle n le nombre de spires de chacun des enroulements secondaires 24.1 à 24.4, chaque demi-enroulement primaire a également n spires, tandis que l'enroulement 25 a 2.n spires.

Le circuit de la figure 4 comporte un ensemble 28 de plusieurs bornes reliées chacune à la sortie d'un dispositif de sécurité classique, non représenté, (sécurité thermique, sécurité en cas de surtension, etc) protégeant l'onduleur, la source et la charge, ainsi qu'à un dispositif d'arrêt d'urgence manoeuvrable par un opérateur. Ces différentes bornes 28 sont reliées à un circuit 29 à fonction OU dont la sortie est reliée à l'entrée R de remise à zéro d'une bascule D 30. L'entrée CK de signaux d'horloge de la bascule 30 est reliée à la sortie du détecteur 13, et sa sortie Q est reliée à la borne 21 ainsi qu'à l'entrée de commande de l'interrupteur 27. L'entrée D de données de la bascule 30 est reliée à la sortie d'une porte ET 31 dont une première entrée est reliée à une borne 32 et dont une seconde entrée est reliée à la sortie d'un comparateur 33. On peut appliquer sur la borne 32 des signaux de commande des paramètres de sortie de l'onduleur (puissance, courant, tension). Ces signaux de commande sont, de façon connue en soi, des impulsions rectangulaires dont on fait varier le rapport cyclique. La fréquence maximale de ces signaux est avantageusement d'environ 1/10 de la fréquence de résonance de la charge. En l'absence de tels signaux, on applique le niveau logique "1" sur la borne 32. A l'une des entrées du comparateur 33 on applique une tension E'proportionnelle à la tension E de la source alimentant l'onduleur. A l'autre entrée du comparateur 33 on applique une tension de référence $E'_{min}$ qui est égale à environ 1/10 de la valeur nominale de E'.

Le comparateur 33 a pour rôle de n'autoriser la commande des interrupteurs 22, 23 (via la porte 31, la bascule 30 et les portes 19, 20), c'est-à-dire de valider le fonctionnement de l'onduleur que lorsque la tension de la source E dépasse un certain seuil (environ 1/10) de sa valeur nominale dans le présent exemple) qui correspond au bruit de fond du transformateur 11. Bien entendu, la valeur de $E'_{min}$ dépend du transformateur 11.

La bascule 30 recevant des signaux d'horloge qui correspondent aux passages par zéro du courant dans la charge, les signaux issus de la porte 31 sont donc synchronisés avec ce courant de charge. Par contre, les signaux de sécurité arrivant de la porte 29 agissent sur l'entrée R de la bascule 30, donc de manière asynchrone, le plus rapidement possible.

La commande de l'interrupteur 27 par le signal de la sortie Q de la bascule 30 est telle qu'un "1" logique sur cette sortie l'ouvre et un "0" le ferme. Ainsi, lorsqu'un "0" y apparaît, ce "0" inhibe le signal de commande des interrupteurs 22, 23 et court-circuite l'enroulement 25 via le pont 26. Ce court-circuit absorbe l'énergie magnétisante du transformateur 17, en annulant la tension aux bornes des enroulements secondaires 24.1 à 24.4 et ouvre tous les interrupteurs K1 à K4. On obient donc un arrêt rapide de l'onduleur. Dans le cas où l'on applique un signal de commande sur la borne 32, les passages à "0" de ce signal sont très rapidement suivis d'ouvertures des interrupteurs K1 à K4, et si, comme précisé ci-dessus, la fréquence de ce signal de commande est nettement inférieure à la fréquence de résonance de la charge (par exemple 1/10), on peut ainsi commander très facilement les paramètres de sortie de l'onduleur en faisant varier la fréquence de récurrence de ce signal de commande, et ce, sans faire varier la valeur de la tension E, les interrupteurs K1 à K4 suivant très fidèlement les variations de ce signal de commande (les fermetures des interrupteurs K1 à K4 sont, bien entendu, également très rapides, en particulier grâce aux condensateurs tels que le condensateur 8 de la figure 1).

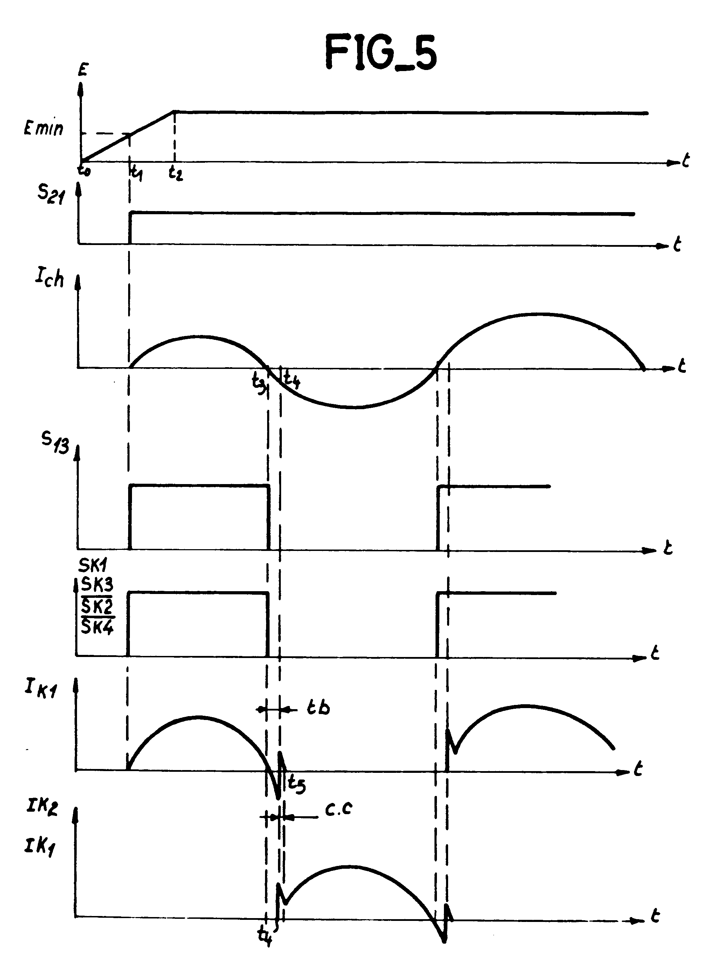

Sur le diagramme de la figure 5, on a représenté, en fonction du temps t, diverses formes d'ondes correspondant à un démarrage de l'onduleur de l'invention représenté sur les figures 3 et 4, un "1" étant appliqué en 32, et la bascule 30 étant supprimée et remplacée par une simple liaison entre la sortie de la porte 31, la borne 21 et la commande de l'interrupteur 27. Ces formes d'ondes sont respectivement, de haut en bas, celles correspondant à la tension E de la source alimentant l'onduleur, au signal $S_{21}$ à la borne 21, au courant $I_{ch}$ dans la charge, au signal $S_{13}$ à la sortie du détecteur 13, aux signaux SK1, SK3, $\overline{SK2}$ et $\overline{SK4}$ de commande des interrupteurs K1, K3, K2 et K4, au courant IK1, IK3 passant par les interrupteurs K1 et K3 (on suppose qu'ils sont fermés en premier), et au courant IK2, IK4 passant par les interrupteurs K2 et K4.

On suppose qu'au départ la tension E est nulle et qu'à l'instant $t_0$ elle se met à croître à peu près linéairement jusqu'à sa valeur nominale. Tant que cette tension E n'atteint pas la valeur $E_{min}$ (correspondant, à un facteur constant près, à la tension E'min), tous les interrupteurs K1 à K4 sont ouverts et aucun courant ne circule dans la charge. Dès que la tension E atteint la valeur Emin, à l'instant $t_1$, la porte 31 s'ouvre et le signal S21 passe à "1", ce qui ferme aussitôt les interrupteurs K1 et K3. A l'instant $t_1$ la tension E n'ayant pas atteint sa valeur nominale, la première demi-alternance du courant $I_{ch}$ a une amplitude inférieure à l'amplitude nominale. A la fin de la première demi-alternance de $I_{ch}$, à l'instant $t_3$, le courant $I_{ch}$ s'annule, le signal S13 passe donc à "0", ce qui fait que K1 et K3 s'ouvrent et que K2 et K4 se ferment (par inversion des commandes des interrupteurs 22, 23). Après $t_3$, le courant $I_{ch}$ s'inverse et suit une allure sinusoïdale d'amplitude supérieure à celle de la première demi-sinusoïde puisque la composante inductive L de la charge, qui s'opposait au départ à la croissance brusque de la tension E, commence à emmagasiner de l'énergie. Les interrupteurs K2 et K4 ne se ferment pas instantanément à l'instant $t_3$, mais peu après à l'instant $t_4$, alors que les interrupteurs K1 à K3 s'ouvrent peu après $t_4$ à l'instant $t_5$ bien que les fronts descendants de SK1 et SK2 et les fronts montants de SK2 et SK4 se produisent pratiquement tous à l'instant $t_3$, $t_4$ celà à cause du temps de temps de propagation des ordres (temps de boucle $t_b$ entre $t_3$ et $t_4$) en ce qui concerne la fermeture et l'ouverture, et en outre, pour l'ouverture, du fait du phénomène d'évacuation de charges de la jonction collecteur-base du transistor principal (référencé 1 en figure 1). Entre les instants $t_3$ et $t_4$, l'allure du courant dans K1 et K3 est la même que celle du courant $I_{ch}$. En $t_4$, les interrupteurs K2 et K4 se ferment alors que K1 et K3 ne sont pas encore ouverts. Par conséquent, on obtient entre $t_4$ et $t_5$ le phénomène de court-circuit (c.c.) auto-limité expliqué ci-dessus en référence aux figures 1 et 2 : les courants IK 1 et IK 3 s'inversent brusquement, croissent rapidement et s'annulent dès épuisement des charges, tandis que les courants IK2 et IK4 présentent une pointe juste après $t_4$ et reprennent leur allure normale après $t_5$. Par ailleurs, on notera que grâce à l'utilisantion du signal du détecteur 13 on obtient un suivi de la fréquence de résonance de la charge à chaque demi-période : l'onduleur s'adapte très facilement et très rapidement à toute variation de cette fréquence. Il est, bien entendu, possible d'introduire dans le circuit de commande des interrupteurs des circuits, connus en soi, permettant de réduire le retard $t_b$, et même de réaliser une commande en avance de phase.

L'interrupteur cascode représenté en figure 6 est surtout avantageux lorsque la tension de la source E est élevée. Cet interrupteur est branché entre les bornes 34 et 35. Le transistor principal 36 est un NPN bipolaire, son collecteur étant directement relié à la borne 34. Sa base est alimentée en courant à partir d'une borne 37 reliée à une source auxiliaire $+V_a$. Cette borne 37 est reliée à la base du transistor 36 par un circuit série comportant successivement : une résistance 38, une autre résistance 39 (en parallèle sur laquelle est tranché un condensateur 40) et deux diodes 41, 42 d'antisaturation dont les cathodes sont orientées vers la base du transistor 36. Le point commun de la résistance 39 et de la diode 41 est relié à l'anode d'une diode 43 dont la cathode est reliée à la borne 34. La base du transistor 36 est reliée à son émetteur par une résistance 44. D'autre part, la base du transistor 36 est reliée à la cathode d'une diode Zener 45 en parallèle sur laquelle est branché un condensateur 46 et dont l'anode est reliée à l'anode d'une diode 47, la cathode de la diode 47 étant reliée à la borne 35. L'émetteur du transistor 36 est relié au drain d'un transistor MOS 48 dont la source est directement reliée à la borne 35 et dont la porte est reliée par une résistance 49 à cette borne 35. L'anode d'une diode 50 est reliée à la borne 35 et sa cathode à la borne 34. La porte du transistor 48 reçoit les signaux de commande pour l'interrupteur cascode depuis une borne 50 via un circuit d'injection 51 comportant, de façon classique, plusieurs inverseurs logiques branchés en parallèle et alimentés par ladite source de tension auxiliaire $+V_a$ découplée par un condensateur 52 de capacité suffisante.

L'interrupteur cascode représenté sur la figure 7 reçoit ses signaux de commande directement d'un transformateur d'isolation galvanique et de déphasage (0 et 180°) tel que le transformateur 17 de la figure 4. Une extrémité d'un enroulement secondaire du transformateur 17, par exemple l'enroulement 24.1, est reliée à la porte d'un transistor MOS 53 d'attaque du cascode, dont le drain est relié à une borne 54. L'autre extrémité de l'enroulement 24.1 est reliée à une borne 55. Les bornes 54 et 55 ont des rôles analogues à ceux des bornes 4 et 3 du cicuit de la figure 1. La source du transistor 53 est reliée à la cathode d'une diode Zener 56, en parallèle sur laquelle est branché un condensateur 57, et dont l'anode est reliée à l'arode d'une diode 58 dont la cathode est reliée à la borne 55. La source du transistor 53 est également reliée à la base d'un transistor bipolaire 59, dont le collecteur est directement relié à la borne 54, dont la base est reliée à son émetteur par une résistance 60, et dont l'émetteur est relié au drain d'un transistor MOS 61. La source du transistor 61 est directement reliée à la borne 55, et sa porte est reliée d'une part à l'extrémité de l'enroulement 24.1 qui est par ailleurs reliée à la porte du transistor 53, d'autre part à la borne 55 par une résistance 62. En parallèle sur la résistance 62, on branche un circuit série comportant deux diodes Zener 63, 64 disposées tête-bêche (dont les anodes sont reliées ensemble). La borne 55 est reliée à l'anode d'une diode 65 dont la cathode est reliée à la borne 54.

## Revendications

1. Onduleur de tension alimentant une charge résonante série autopiloté en fréquence comportant au moins un demi-pont d'interrupteurs commandés (K1 - K4), un capteur de courant (11) captant le courant passant dans la charge (10) et relié à un détecteur de zéro (13) suivi d'un circuit d'inversion de phase (14 ou 17) dont la sortie non inversée (15 ou 24.1, 24.3) est reliée à la commande d'un interrupteur dans le cas d'un demi-pont, ou aux commandes des interrupteurs d'une diagonale (K2, K4) de pont d'inturrupteurs, et dont la sortie inversée (16 ou 24.2, 24.4) est reliée à la commande de l'autre interrupteur ou de l'autre diagonale (K1, K3), respectivement, caractérisé en ce que chaque interrupteur commandé (K1-K4) est en montage cascade et comprend : un interrupteur principal (1) en série avec un interrupteur auxiliaire (2), la commande se faisant par ouverture et fermeture de l'interrupteur auxiliaire (2) ; et en ce qu'un circuit, disposé entre les bornes (9, 3) de l'interrupteur commandé, est constitué d'un montage parallèle d'une capacité (8) et d'une diode zener (6) en série avec une diode (7).

2. Onduleur selon la revendication 1, caractérisé par le fait qu'il comporte en aval du détecteur de zéro un circuit (18) d'inhibition relié à une borne (21) recevant au moins un signal extérieur (32, 33, 29) inhabant le signal de commande des interrupteurs.

3. Onduleur selon la revendication 2, comportant un transformateur d'isolation galvanique dans le circuit de commande des interrupteurs, caractérisé par le fait que ce transformateur comporte un enroulement auxiliaire (25) relié via un dispositif redresseur (pont 26) à un interrupteur normalement ouvert (27), court-circuitant la sortie du pont sous la commande dudit signal extérieur.

**4.** Onduleur selon l'une des revendication 2 ou 3, dans lequel le capteur de courant de charge comporte un transformateur de courant (11), caractérisé par le fait qu'il comporte un circuit comparateur (33) produisant un desdits signaux extérieurs tant que la tension alimentant l'onduleur n'atteint pas un seuil déterminé correspondant sensiblement au niveau maximal du bruit pouvant être produit par ce transformateur de courant.

**5.** Onduleur selon l'une quelconque des revendications 2 à 4, caractérise par le fait qu'il comporte des dispositifs de sécurité (28) produisant au moins une partie desdits signaux extérieurs.

**6.** Onduleur selon l'une quelconque des revendications 2 à 5, caractérisé par le fait qu'un générateur d'impulsions de commande à rapport cyclique variable produit un desdits signaux extérieurs.

**7.** Onduleur selon l'une des revendications 4 ou 6, caractérisé par le fait que ledit signal extérieur est envoyé sur une entrée synchrone d'une bascule (30) dont la sortie est reliée à ladite borne (21) du circuit d'inhibition, et dont l'entrée de signaux d'horloge est reliée à la sortie du détecteur de zéro.

**Claims**

**1.** A voltage inverter powering a series resonant load, with frequency self-control, comprising at least one half-bridge of controlled switches (K1-K4), one current sensor (11) that senses the current passing through the load (10) and connected to a zero detector (13) followed by a phase inversion circuit (14 or 17), the non-inverted output (15 or 24.1, 24.3) of which is connected to a switch control terminal in the case of a half-bridge, or to the control terminals of the switches of a switch bridge diagonal (K2, K4), and the inverted output (16 or 24.2, 24.4) of which is connected to the control terminal of the other switch or to that of the other diagonal (K1, K3), respectively, characterized in this that each controlled switch (K1-K4) is cascode connected and comprises: a main switch (1) in series with an auxiliary switch (2), the auxiliary switch (2) being controlled on and off; and in this that a circuit, connected across the terminals (9, 3) of the controlled switch, comprises the parallel connection of a capacitor (8) and a zener diode (6), in series with a diode (7).

**2.** An inverter according to claim 1, characterized in this that it comprises, downstream the zero detector, an inhibition circuit (18) connected to a terminal (21) receiving at least one external signal (32, 31, 29) that inhibits the control signal of the switches.

**3.** An inverter according to claim 2, comprising a galvanic insulation transformer in the control circuit of the switches, characterized in this that said transformer comprises an auxiliary winding (25) connected, through a rectifier device (bridge 26), to a normally open switch, short-circuiting the bridge output under the control of said external signal.

**4.** An inverter according to claim 2 or 3, wherein the load current sensor comprises a current transformer (11), characterized in this that it comprises a comparator circuit (33) that produces one of said external signals as long as the voltage powering the inverter has not reached a determined threshold which corresponds substantially to the maximum noise level that can be produced by said current transformer.

**5.** An inverter according to any of claims 2 to 4, characterized in this that it comprises safety devices (28) that produces at least a part of said external signals.

**6.** An inverter according to any of claims 2 to 5, characterized in this that a generator of control pulses with a variable duty cycle produces one of said external signals.

**7.** An inverter according to claim 4 or 6, wherein said external signal is sent to a synchronous input of a flip-flop (30), the output of which is connected to said terminal (21) of the inhibition circuit, and the clock signal input of which is connected to the output of the zero detector.

**Patentansprüche**

**1.** Spannungswechselrichter mit Frequenzselbstführung zum Versorgen einer Serienresonanzlast, mit zumindest einer Halbbrücke von gesteuerten Schaltern (K1 bis K4), mit einem Stromfühler (11), der den in der Last (10) fließenden Strom erfaßt und mit einem Null-Detektor (13) verbunden ist, dem eine Phasenumkehrschaltung (14 oder 17) folgt, deren nichtinvertierender Ausgang (15 oder 24.1, 24.3) im Falle einer Halbbrücke mit dem Steuereingang eines Schalters oder mit Steuereingängen von Schaltern (K2, K4) in einer Diagonale einer Schalterbrücke verbunden ist und deren invertierender Ausgang (16 oder 24.2, 24.4) mit dem Steuereingang des anderen Schalters bzw. den Schaltern (K1, K3) in der anderen Diagonale verbunden ist, dadurch gekennzeichnet, daß jeder gesteuerte Schalter (K1 bis K4) als Cascode-Schaltung ausgebildet ist und einen Hauptschalter (1) in Serie mit einem Hilfsschalter (2) aufweist, wobei die Ansteuerung durch Öffnen und Schließen des Hilfsschalters (2) erfolgt, und daß eine Schaltung aus einer Parallelschaltung eines Kondensators (8) und einer Zehnerdiode (6) in Serie mit einer Diode (7) zwischen den Anschlüssen (9, 3) des angesteuerten Schalters gelegen ist.

2. Wechselrichter nach Anspruch 1, dadurch gekennzeichnet, daß stromabwärts vom Null-Detektor eine Sperrschaltung (18) vorgesehen ist, die mit einem Anschluß (21) verbunden ist, der zumindest ein externes Signal (32, 33, 29) empfängt, welches das Steuersignal der Schalter sperrt.

3. Wechselrichter nach Anspruch 2, mit einem Transformator zur galvanischen Isolation in der Steuerschaltung der Schalter, dadurch gekennzeichnet, daß der Transformator eine Hilfswicklung (25) trägt, die über eine Gleichrichteranordnung (Brücke 26) mit einem normalerweise offenen Schalter (27) verbunden ist, der den Ausgang der Brücke bei Ansteuerung mit dem besagten externen Signal kurzschließt.

4. Wechselrichter nach einem der Ansprüche 2 oder 3, bei dem der Stromfühler für die Last einen Stromtransformator (11) aufweist, dadurch gekennzeichnet, daß er eine Vergleichsschaltung (33) aufweist, die eines der besagten externen Signale erzeugt, solange die Versorgungsspannung des Wechselrichters nicht eine bestimmte Schwelle erreicht, die im wesentlichen dem maximalen, vom Stromtransformator erzeugbaren Brummpegel entspricht.

5. Wechselrichter nach einem der Ansprüche 2 bis 4, dadurch gekennzeichnet, daß er Sicherheitseinrichtungen (28) aufweist, die zumindest einen Teil der besagten externen Signale erzeugen.

6. Wechselrichter nach einem der Ansprüche 2 bis 5, dadurch gekennzeichnet, daß ein Generator für Befehlsimpulse mit variablem Arbeitszyklus eines der besagten externen Signale erzeugt.

7. Wechselrichter nach einem der Ansprüche 4 oder 6, dadurch gekennzeichnet, daß das externe Signal zu einem Synchroneingang einer Kippschaltung (30) geleitet wird, deren Ausgang mit dem besagten Anschluß (21) der Sperrschaltung und deren Takteingang mit dem Ausgang des Null-Detektors verbunden ist.

# FIG_1

# FIG_2

# FIG_3

# FIG_6

# FIG_4

EP 0 261 018 B1

FIG_5

FIG_7